# FASCICULE DE BREVET EUROPEEN

(11) **EP 4 551 458 B1**
(45) Date de publication et mention de la délivrance du brevet: **08.04.2026**
(21) Numéro de dépôt: 23750653.0
(22) Date de dépôt: 06.07.2023
(51) Int. Cl.: B64C 11/38, F01D 7/02, F04D 29/32, B64D 27/16

(54) **PROTECTION POUR CIRCUIT DE COMMANDE D'ORIENTATION DE PALES D'HELICES DE MOTEUR D'AERONEF**
SCHUTZ FÜR STEUERUNG ZUR AUSRICHTUNG VON PROPELLERBLÄTTERN EINES FLUGZEUGMOTORS
PROTECTION FOR THE BLADE ORIENTATION CONTROL CIRCUIT OF AIRCRAFT ENGINE PROPELLERS

(30) Priorité: 08.07.2022 FR 2207025
(43) Date de publication de la demande: 14.05.2025
(73) Titulaire: SAFRAN AIRCRAFT ENGINES, 75015 Paris (FR)
(72) Inventeur: BARBIER, Hugues, 77550 MOISSY-CRAMAYEL (FR); ORIOL, Sébastien, 77550 MOISSY-CRAMAYEL (FR); LE NORMAND, Kevin Didier Pierre, 77550 MOISSY-CRAMAYEL (FR)
(74) Mandataire: Santarelli
(86) Numéro de dépôt international: PCT/FR2023/051042
(87) Numéro de publication internationale: WO 2024/009044

(56) Documents cités:
- EP-A1- 3 447 315
- EP-A2- 1 178 223
- EP-A2- 2 192 307
- FR-A1- 2 985 284

## Description

### DOMAINE TECHNIQUE

L'invention concerne un moteur d'aéronef comportant des pales à calage variable permettant de contrôler et/ou d'inverser la poussée générée par ce moteur, et elle a pour objet une protection pour empêcher, en cas de défaillance du système de commande, une inversion de poussée accidentelle lorsque l'aéronef est en vol.

### ÉTAT DE LA TECHNIQUE ANTÉRIEURE

Dans un moteur d'aéronef de type turboréacteur, l'air est admis dans une manche d'entrée pour traverser une hélice de propulsion comportant une série de pales rotatives avant de se scinder en un flux primaire central et un flux secondaire entourant le flux primaire.

Le flux primaire est ensuite compressé dans des étages de compression avant d'atteindre une chambre de combustion, après quoi il est détendu à travers des turbines haute pression et basse pression avant d'être évacué vers l'aval. Le flux secondaire est quant à lui propulsé directement vers l'aval par l'hélice de propulsion dans une veine délimitée par extérieurement par une carène du moteur.

Un tel moteur comporte un corps basse pression par lequel l'hélice de propulsion est couplée à la turbine basse pression, et un corps haute pression par lequel le compresseur haute pression est couplé à la turbine haute pression, ces deux corps étant coaxiaux et indépendants en rotation.

L'inversion de poussée d'un tel moteur peut être assurée en prévoyant des aubes de l'hélice à calage variable, c'est-à-dire dont l'orientation autour de leur axe d'envergure, qui s'étend radialement par rapport à l'axe de rotation du moteur, peut être modifiée en vol.

Dans ce cas, les aubes peuvent occuper une orientation de propulsion pour que le moteur génère une poussée dirigée vers sa direction aval, et une orientation dite d'inversion de poussée, dans laquelle il génère une poussée dirigée vers sa direction amont, cette dernière étant destinée à être utilisée uniquement lorsque l'aéronef est au sol pour décélérer l'aéronef.

En pratique, les orientations de propulsion sont couramment dénommées grands pas, et les orientations d'inversion de poussée sont couramment dénommées petits pas.

Le passage de l'orientation de propulsion à l'orientation d'inversion de poussée s'effectue typiquement par une rotation des aubes de l'ordre de 90°, la commande d'orientation étant généralement assurée par un circuit hydraulique.

Cependant, plusieurs défaillances peuvent conduire à une dérive du pas en vol vers la position d'inversion de poussée. Il peut s'agir d'une défaillance de l'organe de contrôle du pas, c'est-à-dire d'un calculateur pilotant le circuit hydraulique, ou encore une défaillance du circuit hydraulique en soi.

Dans ce cadre, un système de protection intégré au circuit hydraulique assure que les pales ne peuvent pas passer à l'orientation d'inversion de poussée lorsque l'aéronef est par exemple en vol de croisière, de telles protections étant décrites dans les documents de brevets FR2981684A1, FR2978953A1, FR2985284A1, FR30104153A1, et EP1178223.

Ainsi, lorsqu'il est détecté que les pales sont ou s'approchent d'une orientation d'inversion de poussée alors que le moteur est en configuration de vol, la protection est actionnée pour agir sur le circuit hydraulique afin qu'il les ramène vers une orientation de propulsion.

D'une manière générale, ce type de protection peut être mis en œuvre dans un moteur non caréné de type turbopropulseur ou bien « open rotor » à double-hélice contrarotative, ou dans un moteur caréné tel qu'un turboréacteur ayant des aubes de soufflante à calage variable.

En pratique, il apparaît que le temps de réaction des protections existantes est de l'ordre de la seconde, entre l'instant où elles sont commandées et l'instant où les pales commencent effectivement à être ramenées vers une orientation de propulsion.

Le but de l'invention est d'apporter une solution pour améliorer la réactivité d'une telle protection.

### EXPOSÉ DE L'INVENTION

A cet effet, l'invention a pour objet un circuit de commande hydraulique d'actionnement d'un vérin d'orientation à double effet pour orienter des pales d'une hélice de propulsion de moteur d'aéronef, ce vérin à double effet comprenant une première et une deuxième chambre, ce circuit comprenant :
- une conduite haute pression et une conduite basse pression ;
- une vanne distributrice pour relier la première chambre à la conduite haute pression et la deuxième chambre à la conduite basse pression ou inversement, ou pour isoler les deux chambres des conduites haute pression et basse pression ;
- une première vanne de protection pouvant occuper une position désactivée ou une position d'activation dans laquelle elle met en communication la première chambre avec la conduite haute pression ;
- une deuxième vanne de protection pouvant occuper une position désactivée ou une position d'activation dans laquelle elle met en communication la deuxième chambre avec la conduite basse pression ;
caractérisé en ce que :
- ces vannes de protection comportent une entrée hydraulique d'activation et une entrée hydraulique de désactivation qui peuvent être reliées à la conduite haute pression ou à la conduite basse pression pour les placer en position de désactivation ou d'activation ;
- une vanne d'amplification pouvant occuper une position désactivée ou une position d'activation dans laquelle elle relie la conduite haute pression à chaque entrée d'activation et la conduite basse pression à chaque entrée de désactivation pour activer les vannes de protection ;
- la vanne d'amplification comportant une entrée hydraulique de pilotage pour la placer en position d'activation lorsque cette entrée de pilotage est reliée à la conduite basse pression, et pour la placer en position désactivée lorsque cette entrée de pilotage (46) est reliée à la conduite haute pression ;
- et une électrovanne de protection pouvant occuper une position de désactivation ou une position d'activation dans laquelle elle relie l'entrée de pilotage de la vanne d'amplification à la conduite basse pression afin de l'activer.

Avec cette solution, la vanne d'amplification permet de commander les vannes de protection de façon hydraulique afin qu'elles changent rapidement de position sous l'effet de la pressurisation de leurs entrées d'activation.

L'invention concerne également un circuit ainsi défini, dans lequel la première et la deuxième vanne de protection sont mécaniquement couplées et partagent une même entrée hydraulique d'activation et une même entrée hydraulique de désactivation. L'invention concerne également un circuit ainsi défini, dans lequel la première et la deuxième vanne de protection comportent chacune un tiroir distributeur, et dans lequel ces deux tiroirs distributeurs sont reliés l'un à l'autre par une tige.

L'invention concerne également un circuit ainsi défini, dans lequel chaque vanne de protection est équipée d'un ressort de rappel tendant continuellement à la rappeler vers sa position d'activation.

L'invention concerne également un circuit ainsi défini, dans lequel la vanne d'amplification est équipée d'un ressort de rappel tendant continuellement à la ramener vers sa position d'activation.

L'invention concerne également un circuit ainsi défini, dans lequel les vannes de protection isolent la première chambre et la deuxième chambre de la vanne distributrice lorsqu'elles sont activées.

L'invention concerne également un moteur d'aéronef comportant un circuit ainsi défini.

### BRÈVE DESCRIPTION DES DESSINS

La [Fig. 1] est une vue en coupe longitudinale d'un turboréacteur à double flux ;
La [Fig. 2] est une vue selon l'axe d'envergure d'une pale d'hélice propulsive ayant une orientation de propulsion ;
La [Fig. 3] est une vue selon l'axe d'envergure d'une pale d'hélice propulsive ayant une orientation d'inversion de poussée ;
La [Fig. 4] est une vue schématique du circuit de commande selon l'invention en fonctionnement nominal ;
La [Fig. 5] est une vue schématique du circuit de commande selon l'invention lorsque son système de protection est activé.

### EXPOSÉ DÉTAILLÉ DE MODES DE RÉALISATION PARTICULIERS

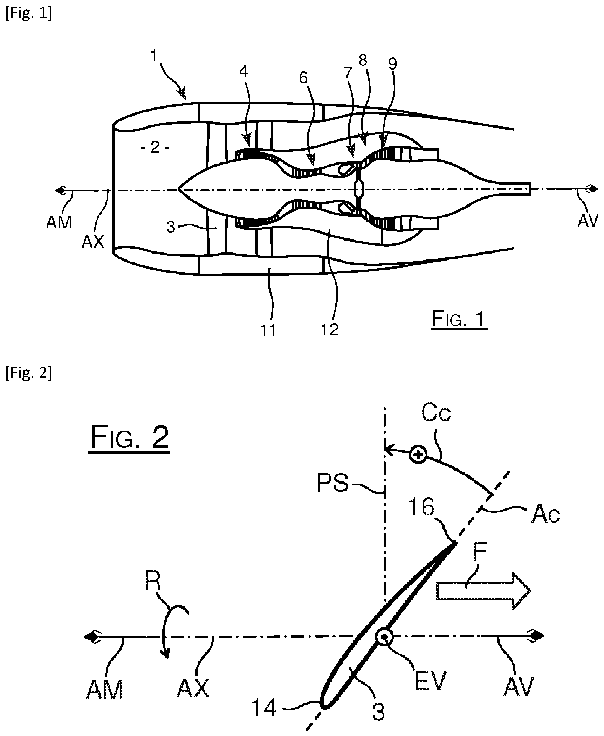

Dans un moteur d'aéronef tel que le moteur repéré par 1 sur la figure 1, l'air est admis au niveau d'une manche d'entrée 2 située en amont AM pour traverser les pales 3 d'une hélice de propulsion, encore appelée soufflante, comportant une série de pales rotatives avant de se scinder en un flux primaire central et un flux secondaire entourant le flux primaire. Ces deux flux circulent dans le moteur selon sa direction longitudinale AX, depuis l'amont AM vers l'aval AV de ce moteur lorsqu'il génère une poussée de propulsion.

Le flux primaire est admis dans une prise d'air 4 située en aval de l'hélice de propulsion et s'étendant autour de l'axe longitudinal AX, pour être ensuite compressé dans des compresseurs basse pression 5 et haute pression 6 avant d'arriver dans une chambre de combustion 7. Ce flux primaire est ensuite détendu à travers une turbine haute pression 8 et une turbine basse pression 9 avant d'être évacué vers l'aval. Le flux secondaire est quant à lui propulsé directement vers l'aval par l'hélice de propulsion dans une veine délimitée extérieurement par une nacelle 11 portant l'ensemble du moteur.

Un tel moteur de type double-corps comporte un corps dit basse pression par lequel l'hélice de propulsion est couplée à la turbine basse pression 9, et un corps dit haute pression par lequel le compresseur haute pression 6 est couplé à la turbine haute pression 8, ces deux corps étant coaxiaux et indépendants en rotation. Ces corps sont entourés par un ensemble de carters 12 se succédant le long de l'axe longitudinal qu'ils entourent.

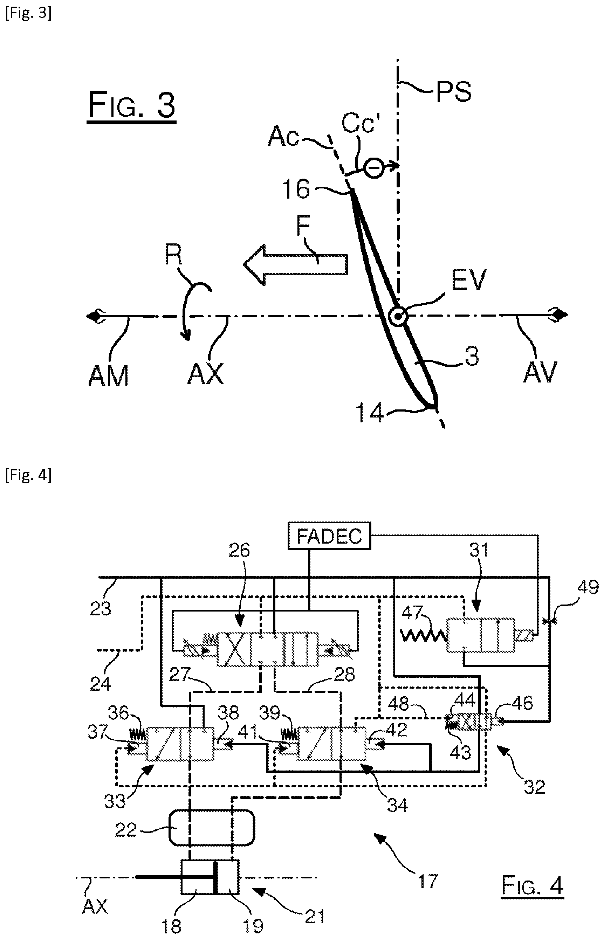

Sur la figure 3, une pale à calage variable 3 d'hélice de propulsion comporte une face d'intrados et une face d'extrados s'étendant entre un bord d'attaque 14 et un bord de fuite 16. Cette pale 3 s'étend selon un axe dit d'envergure EV radial par rapport à l'axe AX, depuis un pied par lequel elle est rigidement solidarisée à un élément de rotor non représenté, jusqu'à un sommet correspondant à son extrémité libre qui est en regard de la face interne de la nacelle 11.

L'angle de calage de la pale est l'angle entre l'axe de corde Ac, qui passe par le bord d'attaque 14 et par le bord de fuite 16 en s'étendant dans un plan normal à l'axe EV, et le plan PS de l'hélice qui est normal à l'axe AX. Dans la suite, lorsqu'un tel angle de calage a une valeur positive, il correspond à une propulsion vers l'aval du flux d'air dans lequel baigne la pale en rotation, c'est-à-dire une direction de propulsion. Une valeur négative correspond à une propulsion du flux d'air vers l'amont.

Sur la figure 3, la pale 3 occupe une orientation de propulsion, correspondant par exemple à un régime dit de croisière : l'axe de corde Ac est incliné d'un angle de calage Cc positif par rapport au plan PS.

Dans la configuration correspondant à une orientation de propulsion de la figure 3, l'angle de calage de la pale 13 est positif, de sorte qu'en étant entrainée en rotation dans le sens repéré par R sur les figures, elle propulse le flux d'air de l'amont AM vers l'aval AV. Le sens de rotation R correspond au sens horaire en regardant l'hélice selon l'axe AX, de face, c'est-à-dire depuis son amont AM.

Cette pale est du type à calage variable : son orientation autour de l'axe EV est ajustable selon les conditions de fonctionnement du moteur. Dans la situation de la figure 3, l'orientation de la pale 13 correspond à un fonctionnement du moteur en propulsion, c'est-à-dire dans lequel le flux F traversant le moteur est propulsé l'amont AM vers l'aval AV.

En phase d'inversion de poussée, par exemple lorsque l'aéronef atterrit et que le moteur est exploité pour freiner l'aéronef, les pales de l'hélice sont commandées pour modifier leurs orientations. Elles pivotent alors autour de leurs axes d'envergures, afin de passer de l'orientation de propulsion correspondant à la figure 3, à l'orientation d'inversion de poussée correspondant à la situation représentée sur la figure 4.

Sur l'exemple des figures 2 et 3, la pale pivote dans le sens direct pour passer de l'orientation de propulsion à celle d'inversion de poussée, de sorte que son bord d'attaque se trouve en aval de son bord de fuite à l'orientation d'inversion de poussée. Lors du passage d'une orientation à l'autre, la pale passe par une position transitoire dite à 0° dans laquelle son axe de corde passe par le plan PS de l'hélice. Il importe que la pale reste peu de temps à cette position transitoire car celle-ci est susceptible d'engendrer une survitesse du moteur.

Il est aussi possible de prévoir une configuration différente, dans laquelle la pale tourne en sens inverse pour passer de l'orientation de propulsion à l'orientation d'inversion de poussée, son bord de fuite restant alors en amont de son bord d'attaque lorsqu'elle est à l'orientation d'inversion de poussée. Lors du passage d'une orientation à l'autre, la pale passe par une position dite en drapeau dans laquelle son axe de corde est parallèle à l'axe AX.

Sur la figure 4, un circuit hydraulique 17, assure la pressurisation d'une première chambre 18 amont ou d'une deuxième chambre 19 aval d'un vérin d'orientation à double effet 21 agissant sur la position longitudinale d'un arbre central d'un moteur. Cela permet de maintenir les pales de l'hélice à un angle de calage prédéterminé en maintenant cet arbre à une position donnée et de modifier l'angle de calage en déplaçant cet arbre.

Ce vérin 21 est porté par l'arbre central qui est tournant, en étant alimenté par le circuit de commande qui est porté par des éléments fixes du moteur, grâce à un palier de transfert hydraulique 22 entourant l'arbre central, ce palier pouvant être le siège de fuites hydrauliques.

Ce circuit 17 comporte une conduite d'alimentation 23 haute pression alimentée par une pompe non représentée, et une conduite de retour 24 basse pression débouchant dans un réservoir non représenté.

Les conduites d'alimentation 23 et de retour 24 sont reliées au vérin 21 par l'intermédiaire d'une vanne distributrice 26 à trois positions, comprenant une position neutre centrale correspondant à celle qu'elle occupe dans la figure 4, ainsi qu'une position d'augmentation du pas et une position de réduction du pas.

Cette vanne distributrice 26, qui est ici un tiroir distributeur, est reliée à la chambre amont 18 par une conduite amont 27 et par le palier 22, et elle est reliée à la chambre aval 19 par une conduite aval 28 et par le palier 22.

Dans la position neutre de la figure 4, les conduites 23 et 24 sont isolées des chambres 18 et 19, qui sont à des pressions de valeur intermédiaire entre la haute pression et la basse pression, les pales 3 de l'hélice ayant de ce fait leur angle d'orientation immobilisé à une valeur fixe.

Lorsque la vanne distributrice 26, qui est ici un tiroir distributeur, est placée à sa position d'augmentation du pas, c'est-à-dire décalée vers la droite par rapport à sa position de la figure 4, la vanne distributrice met en communication la chambre amont 18 avec la conduite d'alimentation haute pression 23, et la chambre aval 19 avec la conduite de retour basse pression 24. Ceci a pour effet de déplacer la tige du vérin 21 vers la droite sur la figure 4, pour augmenter l'angle Cc de calage des pales 3 afin de les placer à une orientation de propulsion.

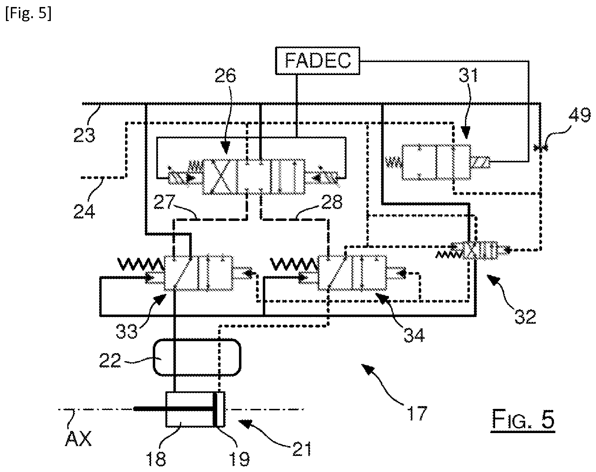

Lorsque la vanne distributrice 26, est à sa position de réduction du pas comme sur la figure 5, c'est-à-dire décalée vers la gauche par rapport à sa position de la figure 4, elle met en communication la chambre amont 18 avec la conduite de retour 24, et la chambre aval 19 avec la conduite haute pression 23. Ceci a pour effet de déplacer la tige du vérin 21 vers la gauche sur la figure 4 pour diminuer l'angle Cc de calage des pales 3 afin de les placer à une orientation d'inversion de poussée.

Le circuit 17 intègre un système de protection assurant que les pales 3 ne puissent pas atteindre accidentellement une orientation d'inversion de poussée alors que l'aéronef est en vol.

Ce système de protection comporte une électrovanne de protection 31, une vanne d'amplification 32, ainsi qu'une première vanne de protection 33 et une deuxième vanne de protection 34.

La vanne de protection 33 est ici un tiroir distributeur à deux positions équipé d'un ressort de rappel 36, et ayant une entrée hydraulique d'activation 37 située du côté du ressort 36, et une entrée hydraulique de désactivation 38 située du côté opposé au ressort 36.

Lorsque l'entrée d'activation 37 est dépressurisée et que l'entrée de désactivation 38 est pressurisée, le tiroir est poussé par l'entrée de désactivation à l'encontre du ressort 36, pour placer la vanne 33 en position désactivée, comme sur la figure 3. Lorsque l'entrée d'activation 37 est pressurisée et que l'entrée de désactivation 38 est dépressurisée, le tiroir est poussé par la pressurisation de l'entrée d'activation pour placer la vanne en position activée comme sur la figure 4.

Dans la position désactivée correspondant à la figure 3, la vanne 33 est simplement traversée par l'huile de la conduite amont 27. En position activée, comme dans la figure 3, la vanne 33 met directement en communication la chambre amont 18 avec la conduite haute pression 23, tout en isolant cette chambre 18 de la vanne distributrice 26.

La vanne de protection 34 est ici un tiroir distributeur à deux positions équipé d'un ressort de rappel 39, et ayant une entrée hydraulique d'activation 41 située du côté du ressort 39, et une entrée hydraulique de désactivation 42 située du côté opposé au ressort 39.

Lorsque l'entrée d'activation 41 est dépressurisée et que l'entrée de désactivation 42 est pressurisée, le tiroir est poussé par l'entrée de désactivation à l'encontre du ressort 39, pour placer la vanne 34 en position désactivée, comme dans la figure 3. Lorsque l'entrée d'activation 41 est pressurisée et que l'entrée de désactivation 42 est dépressurisée, le tiroir est poussé par l'entrée d'activation 41 pour placer la vanne en position activée, comme sur la figure 4.

Dans la position désactivée correspondant à la figure 4, la vanne 34 est simplement traversée par l'huile de la conduite aval 28. Lorsqu'elle occupe sa position activée, comme dans la figure 5, elle met directement en communication la chambre aval 19 avec la conduite basse pression 24, tout en isolant cette chambre 19 de la vanne distributrice 26. Comme on l'aura compris, lorsque les deux vannes de protection 33 et 34 sont désactivées, la position du vérin 21, et donc l'angle des pales 3 est régie par la vanne distributrice 26, qui permet d'augmenter ou de diminuer l'angle de ces pales 3.

A l'inverse, lorsque les deux vannes de protection 33 et 34 sont activées, la chambre amont 18 est pressurisée et la chambre aval 19 est dépressurisée, ce qui déplace la tige du vérin 21 vers la droite sur les figures pour ramener l'angle de calage des pales 3 à une orientation de propulsion.

Comme visible sur la figure 4, les entrées d'activation et de désactivation des deux vannes 33 et 34 sont alimentées par la vanne d'amplification 32, qui est ici un tiroir distributeur à deux positions. Ce tiroir distributeur comprend un ressort de rappel 43, une entrée hydraulique passive 44 située du côté du ressort 43, et une entrée hydraulique de pilotage 46 située du côté opposé au ressort 43. L'entrée passive 44 est continuellement soumise à une basse pression du fait qu'elle est en permanence reliée à la conduite basse pression 24.

En fonctionnement nominal correspondant à la figure 4, l'entrée de pilotage 46 de la vanne 32 est pressurisée, de sorte que le tiroir de cette vanne 32 est poussé à l'encontre du ressort 43 par la pressurisation de l'entrée de pilotage 46 pour la placer en position de d'inactivation. Dans cette position la vanne 32 relie les entrées de désactivation 38 et 42 des vannes de protection 33 et 34 à la conduite haute pression 23 pour les pressuriser, et elle relie leurs entrées d'activation 37 et 41 à la conduite basse pression 24 pour les dépressuriser, de sorte que les vannes 33 et 34 sont toutes deux dans leurs positions de désactivation. L'angle de calage des pales 3 est alors de ce fait régi par le pilotage de la vanne distributrice 26.

En fonctionnement de protection correspondant à la figure 5, l'entrée de pilotage 46 est dépressurisée, le tiroir de la vanne 32 est poussé par le ressort 43 pour la placer en position d'activation. Dans cette position, la vanne 32 relie les entrées de désactivation 38 et 42 des vannes de protection 33 et 34 à la conduite basse pression 24 pour les dépressuriser, et elle relie leurs entrées d'activation 37 et 41 à la conduite haute pression 23 pour les pressuriser, ce qui place les vannes 33 et 34 dans leurs positions d'activation. L'angle de calage des pales 3 est alors automatiquement ramené à une orientation de propulsion, du fait de la pressurisation de la chambre amont 18 et de la dépressurisation de la chambre aval 19 engendrée par l'activation des vannes de protection 33 et 34. Alternativement, il est possible de se dispenser du ressort 43 en prévoyant des sections différentes pour les chambres hydrauliques reliées respectivement aux entrées 44 et 46. Si la section de la chambre reliée à l'entrée passive 44 est supérieure à celle de la chambre reliée à l'entrée de pilotage 46 et que ces entrées 44 et 46 sont soumises à la même pression, la poussée de la première chambre est supérieure à celle de deuxième. La poussée résultante déplace alors le tiroir de la vanne 32 vers sa position d'activation. Selon une autre alternative on prévoit un ressort de raideur élevée, pour se dispenser de l'entrée passive 44 de la vanne 32 et donc également de la partie de conduite 48 reliant cette entrée passive 44 à la conduite basse pression 24. La raideur du ressort est alors suffisante pour engendrer un effort supérieur à la poussée hydraulique produite par l'entrée de pilotage 46 lorsque celle-ci est dépressurisée, c'est-à-dire lorsque la pression au niveau de cette entrée 46 est inférieure à un seuil prédéterminé. De cette façon, les efforts du ressort contrent la poussée hydraulique en sens opposé pour déplacer le tiroir de la vanne 32 vers sa position d'activation. La raideur du ressort est alors choisie pour engendrer un effort inférieur à la poussée hydraulique produite par l'entrée 46 lorsque celle-ci est pressurisée par la conduite haute pression 23. Dans ce cas, en fonctionnement nominal lorsque l'électrovanne de protection 31 est fermée, la pressurisation de l'entrée 46 maintient la vanne d'amplification 32 dans sa position d'inactivation, le ressort 43 étant alors comprimé par la pression hydraulique opposée.

La vanne d'amplification 32 est commandée par l'électrovanne de protection 31 qui peut occuper une position activée, c'est-à-dire ouverte comme dans la figure 5, dans laquelle elle dépressurise l'entrée de pilotage 46 de la vanne 32 en mettant cette entrée en communication avec la conduite basse pression 24. En fonctionnement nominal, l'électrovanne de protection 31 occupe une position inactivée, c'est-à-dire fermée, comme sur la figure 4, ce qui assure que l'entrée 46 de la vanne d'amplification 32 est pressurisée pour que cette vanne 32 soit en position d'inactivation.

Comme visible sur la figure 5, la conduite haute pression 23 est équipée d'un diaphragme 49 qui évite de court-circuiter la conduite 23 avec la conduite 24 lorsqu'elles sont reliées l'une à l'autre durant l'activation de l'électrovanne 31.

Cette électrovanne de protection 31 est pilotée électriquement par un calculateur du moteur, usuellement désigné par l'acronyme FADEC (« *Full Autority Digital Engine Control* ») de façon à être inactivée en fonctionnement nominal, et à être activée lorsque le système détecte que les pales 3 se trouvent à une orientation d'inversion de poussée alors que l'aéronef est en vol. Comme on l'aura compris, cette électrovanne 31 est par exemple un tiroir distributeur équipé d'un solénoïde permettant de déplacer ce tiroir d'une position à l'autre selon que le solénoïde est ou non alimenté électriquement. L'électrovanne de protection 31 est équipée d'un ressort de rappel 47 tendant continuellement à la ramener à sa position inactivée, et son passage à sa position d'activation est obtenu en l'alimentant électriquement pour la déplacer vers sa position d'activation à l'encontre du ressort 47.

Comme indiqué plus haut, les vannes de protection 33 et 34 sont équipées de ressorts de rappel 36 et 39 qui tendent continuellement à les ramener vers leurs positions actives : c'est la pressurisation de leurs entrées de désactivation 38 et 42 qui assure que ces vannes sont inactives en fonctionnement nominal.

En cas de défaillance du circuit hydraulique, les entrées d'activation 37, 41 et l'entrée 46 de la vanne d'amplification 32, ainsi que des entrées de désactivation 38, 42 sont dépressurisées. Dans ce cas, les ressorts de rappel 36 et 39 des vannes de protection 33 et 34, et le ressort de rappel 43 de la vanne d'amplification 32 déplacent ces vannes pour les activer, ce qui a pour effet, de ramener les aubes de l'hélice à une orientation de propulsion en cas de dysfonctionnement du circuit hydraulique.

Autrement dit, grâce aux ressorts de rappel, si les pressions sont identiques aux deux entrées de l'une ou l'autre des vannes de protection 33, 34, elles sont ramenées par ces ressorts à leurs positions d'activation.

Par ailleurs, dans l'exemple des figures 4 et 5, les vannes 33 et 34 sont distinctes et indépendantes. Cependant elles peuvent être liées mécaniquement l'une à l'autre, par exemple au moyen d'une tige solidarisant rigidement leurs tiroirs distributeurs l'un à l'autre, de manière à être commandées par une même entrée d'activation et une même entrée de désactivation communes à ces deux vannes.

D'une manière générale, en cas de détection d'une dérive de l'orientation des pales vers leur orientation d'inversion de poussée, le calculateur commande électriquement l'électrovanne de protection pour l'activer.

Cette activation a pour effet de d'activer la vanne d'amplification pour qu'elle dépressurise les entrées de désactivation des deux vannes de protection et pour qu'elle pressurise leurs entrées d'activation, ce qui se traduit par une activation très rapide des vannes de protection pour ramener les pales à leur orientation de propulsion.

En pratique, la mise en œuvre de la vanne d'amplification permet d'obtenir un temps de réaction de l'ordre du dixième de seconde, alors que dans un système sans vanne d'amplification, dans lequel les vannes de protection sont des électrovannes, le temps d'activation est de l'ordre de la seconde.

L'architecture de circuit selon l'invention permet de prévoir une vanne d'amplification ayant un faible dimensionnement comportant un distributeur de faible taille pour qu'un faible débit suffise à changer sa position, et ayant une course faible, de sorte que cette vanne d'amplification peut présenter une masse et un encombrement très inférieurs à ceux des autres vannes du circuit.

Dans l'exemple des figures, l'invention est mise en œuvre sur un turboréacteur équipé d'aubes de soufflante à calage variable, mais elle peut être mise en œuvre dans un moteur non caréné de type turbopropulseur ou bien du type « open rotor » à double-hélice contrarotative.

## Revendications

1. Circuit de commande hydraulique (17) d'actionnement d'un vérin d'orientation (21) à double effet (21) pour orienter des pales (3) d'une hélice de propulsion de moteur d'aéronef, ce vérin à double effet (21) comprenant une première et une deuxième chambre (18, 19), ce circuit (17) comprenant :
- une conduite haute pression (23) et une conduite basse pression (24) ;
- une vanne distributrice (26) pour relier la première chambre (18) à la conduite haute pression (23) et la deuxième chambre (19) à la conduite basse pression (24) ou inversement, ou pour isoler les deux chambres (18, 19) des conduites haute pression et basse pression ;
- une première vanne de protection (33) pouvant occuper une position désactivée ou une position d'activation dans laquelle elle met en communication la première chambre (18) avec la conduite haute pression (23) ;
- une deuxième vanne de protection (34) pouvant occuper une position désactivée ou une position d'activation dans laquelle elle met en communication la deuxième chambre (19) avec la conduite basse pression (24) ;
**caractérisée en ce que** :
- ces vannes de protection (33, 34) comportent une entrée hydraulique d'activation (37, 41) et une entrée hydraulique de désactivation (38, 42) qui peuvent être reliées à la conduite haute pression (23) ou à la conduite basse pression (24) pour les placer en position de désactivation ou d'activation ;
et **en ce qu'**il comporte :
- une vanne d'amplification (32) pouvant occuper une position désactivée ou une position d'activation dans laquelle elle relie la conduite haute pression (23) à chaque entrée d'activation (37, 41) et la conduite basse pression (24) à chaque entrée de désactivation (38, 42) pour activer les vannes de protection (33, 34) ;
et **en ce que** :
- la vanne d'amplification (32) comportant une entrée hydraulique de pilotage (46) pour la placer en position d'activation lorsque cette entrée de pilotage (46) est reliée à la conduite basse pression (24) et pour la placer en position désactivée lorsque cette entrée de pilotage (46) est reliée à la conduite haute pression (23) ;
- et une électrovanne de protection (31) pouvant occuper une position de désactivation ou une position d'activation dans laquelle elle relie l'entrée de pilotage (46) de la vanne d'amplification (32) à la conduite basse pression (24) afin de l'activer.

2. Circuit selon la revendication 1, dans lequel la première et la deuxième vanne de protection (33, 34) sont mécaniquement couplées et partagent une même entrée hydraulique d'activation et une même entrée hydraulique de désactivation.

3. Circuit selon la revendication 2, dans lequel la première et la deuxième vanne de protection (33, 34) comportent chacune un tiroir distributeur, et dans lequel ces deux tiroirs distributeurs sont reliés l'un à l'autre par une tige.

4. Circuit selon l'une des revendications précédentes, dans lequel chaque vanne de protection (33, 34) est équipée d'un ressort de rappel (36, 39) tendant continuellement à la rappeler vers sa position d'activation.

5. Circuit selon l'une des revendications précédentes, dans lequel la vanne d'amplification (32) est équipée d'un ressort de rappel (43) tendant continuellement à la ramener vers sa position d'activation.

6. Circuit selon l'une des revendications précédentes, dans lequel les vannes de protection (33, 34) isolent la première chambre (18) et la deuxième chambre (19) de la vanne distributrice (26) lorsqu'elles sont activées.

7. Moteur d'aéronef comportant un circuit selon l'une des revendications précédentes.

## Patentansprüche

1. Hydraulische Steuerschaltung (17) zur Betätigung eines doppeltwirkenden (21) Schwenkzylinders (21) zum Lenken von Flügeln (3) eines Flugzeugmotor-Antriebspropellers, wobei dieser doppeltwirkende Zylinder (21) eine erste und eine zweite Kammer (18, 19) umfasst, wobei diese Schaltung (17) Folgendes umfasst:
- eine Hochdruckleitung (23) und eine Niederdruckleitung (24);
- ein Verteilerventil (26) zum Verbinden der ersten Kammer (18) mit der Hochdruckleitung (23) und der zweiten Kammer (19) mit der Niederdruckleitung (24) oder umgekehrt, oder zum Isolieren der beiden Kammern (18, 19) der Hochdruck- und Niederdruckleitungen;
- ein erstes Schutzventil (33), das eine deaktivierte Stellung oder eine Aktivierungsstellung einnehmen kann, in der es die erste Kammer (18) mit der Hochdruckleitung (23) in Verbindung setzt;
- ein zweites Schutzventil (34), das eine deaktivierte Stellung oder eine Aktivierungsstellung einnehmen kann, in der es die zweite Kammer (19) mit der Niederdruckleitung (24) in Verbindung setzt;
**dadurch gekennzeichnet, dass**:
- diese Schutzventile (33, 34) einen hydraulischen Aktivierungseingang (37, 41) und einen hydraulischen Deaktivierungseingang (38, 42) aufweisen, die mit der Hochdruckleitung (23) oder der Niederdruckleitung (24) verbunden werden können, um sie in die Deaktivierungs- oder Aktivierungsstellung zu bringen;
und dadurch, dass sie Folgendes umfasst:
- ein Verstärkerventil (32), das eine deaktivierte Stellung oder eine Aktivierungsstellung einnehmen kann, in der es die Hochdruckleitung (23) mit jedem Aktivierungseingang (37, 41) und die Niederdruckleitung (24) mit jedem Deaktivierungseingang (38, 42) verbindet, um die Schutzventile (33, 34) zu aktivieren;
und dass:
- das Verstärkerventil (32), das einen hydraulischen Steuereingang (46) aufweist, um es in die Aktivierungsstellung zu bringen, wenn dieser Steuereingang (46) mit der Niederdruckleitung (24) verbunden ist, und um es in die Deaktivierungsstellung zu bringen, wenn dieser Steuereingang (46) mit der Hochdruckleitung (23) verbunden ist;
- und ein Schutzmagnetventil (31), das eine Deaktivierungsstellung oder eine Aktivierungsstellung einnehmen kann, in der es den Steuereingang (46) des Verstärkerventils (32) zum Aktivieren mit der Niederdruckleitung (24) verbindet.

2. Schaltung nach Anspruch 1, wobei das erste und das zweite Schutzventil (33, 34) mechanisch gekoppelt sind und einen gleichen hydraulischen Aktivierungseingang und einen gleichen hydraulischen Deaktivierungseingang teilen.

3. Schaltung nach Anspruch 2, wobei das erste und das zweite Schutzventil (33, 34) jeweils einen Verteilerschieber aufweisen, und wobei diese beiden Verteilerschieber durch eine Stange miteinander verbunden sind.

4. Schaltung nach einem der vorhergehenden Ansprüche, wobei jedes Schutzventil (33, 34) mit einer Rückstellfeder (36, 39) ausgestattet ist, die kontinuierlich dazu tendiert, es in seine Aktivierungsstellung zurückzuziehen.

5. Schaltung nach einem der vorhergehenden Ansprüche, wobei das Verstärkerventil (32) mit einer Rückstellfeder (43) ausgestattet ist, die kontinuierlich dazu tendiert, es in seine Aktivierungsstellung zurückzuführen.

6. Schaltung nach einem der vorhergehenden Ansprüche, wobei die Schutzventile (33, 34) die erste Kammer (18) und die zweite Kammer (19) von dem Verteilerventil (26) isolieren, wenn sie aktiviert sind.

7. Flugzeugmotor, die eine Schaltung nach einem der vorhergehenden Ansprüche aufweist.

## Claims

1. Hydraulic control circuit (17) for actuating a double-acting (21) steering actuator (21) for orienting the blades (3) of an aircraft engine pusher propeller, this double-acting actuator (21) comprising a first and a second chamber (18, 19), this circuit (17) comprising:
- a high-pressure line (23) and a low-pressure line (24);
- a distributing valve (26) for connecting the first chamber (18) to the high-pressure line (23) and the second chamber (19) to the low-pressure line (24) or vice versa, or for isolating the two chambers (18, 19) from the high-pressure and low-pressure lines;
- a first protection valve (33) being able to assume a deactivated position or an activation position wherein it places the first chamber (18) in communication with the high-pressure line (23);
- a second protection valve (34) being able to assume a deactivated position or an activation position wherein it places the second chamber (19) in communication with the low-pressure line (24);
**characterized in that** :
- these protection valves (33, 34) include an activation hydraulic inlet (37, 41) and a deactivation hydraulic inlet (38, 42) that can be connected to the high-pressure line (23) or to the low-pressure line (24) to place them in the deactivation or activation position;
and **in that** it comprises :
- an amplification valve (32) being able to assume a deactivated position or an activation position wherein it connects the high-pressure line (23) to each activation inlet (37, 41) and the low-pressure line (24) to each deactivation inlet (38, 42) to activate the protection valves (33, 34);
and **in that** :
- the amplification valve (32) including a hydraulic control inlet (46) for placing it in the activation position when this control inlet (46) is connected to the low-pressure line (24) and for placing it in the deactivated position when this control inlet (46) is connected to the high-pressure line (23);
- and a protection solenoid valve (31) being able to assume a deactivation position or an activation position wherein it connects the control inlet (46) of the amplification valve (32) to the low-pressure line (24) in order to activate it.

2. Circuit according to claim 1, wherein the first and the second protection valve (33, 34) are mechanically coupled and share the same activation hydraulic inlet and the same deactivation hydraulic inlet.

3. Circuit according to claim 2, wherein the first and the second protection valve (33, 34) each include a slide valve, and wherein these two slide valves are connected to one another by a rod.

4. Circuit according to claim 1, wherein each protection valve (33, 34) is equipped with a return spring (36, 39) tending continuously to return it towards the activation position thereof.

5. Circuit according to claim 1, wherein the amplification valve (32) is equipped with a return spring (43) tending continuously to return it to the activation position thereof.

6. Circuit according to claim 1, wherein the protection valves (33, 34) isolate the first chamber (18) and the second chamber (19) from the distributing valve (26) when they are activated.

7. Aircraft engine including a circuit according to one of the preceding claims.
